# EUROPÄISCHE PATENTANMELDUNG

(11) **EP 4 194 716 A1**
(43) Veröffentlichungstag der Anmeldung: **14.06.2023**
(21) Anmeldenummer: 21213494.4
(22) Anmeldetag: 09.12.2021
(51) Int. Cl.: F16H 55/08, F16H 55/18

(54) **ZAHNRADGETRIEBE SOWIE SITZLÄNGSVERSTELLUNG FÜR EIN KRAFTFAHRZEUG**

(71) Anmelder: IMS Gear SE & Co. KGaA, 78166 Donaueschingen (DE)
(72) Erfinder: Aberle, Steffen, 78126 Königsfeld (DE); Irion, Manuel, 78647 Trossingen (DE); Fuchs, Gabriel, 78479 Reichenau (DE); Hengstler, Manuel, 78112 St. Georgen (DE)
(74) Vertreter: Westphal, Mussgnug & Partner Patentanwälte mbB

(57) **Zusammenfassung**

Zahnradgetriebe (12) mit einem ersten Zahnrad (10), das erste Zahnflanken (26) aufweist, und einem zweiten Zahnrad (30), das zweite Zahnflanken (32) aufweist und das mit dem ersten Zahnrad (10) im Eingriff steht, wobei das erste Zahnrad (10) einen Kopfkreis (14) mit einem Kopfkreisradius (16), einen Fußkreis (18) mit einem Fußkreisradius (20) und einen zwischen dem Kopfkreis (14) und dem Fußkreis (18) angeordneten Modifikationskreis (22) mit einem Modifikationskreisradius (24) aufweist, wobei die ersten Zahnflanken (26) zwischen dem Fußkreis (18) und dem Modifikationskreis (22) jeweils eine Aussparung (28) derart aufweisen, dass beim Kämmen der Zahnräder (10, 30) zwischen dem Fußkreis (18) und dem Modifikationskreis (22) kein Kontakt zwischen den ersten Zahnflanken (26) und den zweiten Zahnflanken (32) stattfindet, sowie Sitzlängsverstellung für ein Kraftfahrzeug mit einem Zahnradgetriebe (12) .

## Beschreibung

Die Erfindung betrifft ein Zahnradgetriebe sowie eine Sitzlängsverstellung für ein Kraftfahrzeug.

Insbesondere in elektromechanischen Sitzlängsverstellungen in Kraftfahrzeugen werden Zahnradgetriebe eingesetzt, an die hohe Anforderungen hinsichtlich des Geräusch- und Vibrationsverhaltens gestellt werden.

Zur Herstellung von möglichst geräusch- und vibrationsarmen Zahnradgetrieben ist es bekannt, dass die Schwingungsanregung mithilfe einer Kopfrücknahme oder einer Überdeckungserhöhung reduziert werden kann. Bei den in Sitzlängsverstellungen häufig eingesetzten Schraubradgetrieben, die eine Schnecke und ein Schneckenrad aufweisen, wird die Kopfrücknahme dabei am Schneckenrad vorgenommen.

Maßnahmen wie der Kopfrücknahme und der Überdeckungserhöhung sind jedoch insbesondere fertigungstechnische Grenzen gesetzt.

Der Erfindung liegt daher die Aufgabe zugrunde, ein Zahnradgetriebe sowie eine Sitzlängsverstellung für ein Kraftfahrzeug bereitzustellen, die eine geringe mechanische und akustische Schwingungsanregung aufweisen und fertigungstechnisch einfach herstellbar sind.

Die Aufgaben werden erfindungsgemäß gelöst durch ein Zahnradgetriebe mit den Merkmalen des Patentanspruchs 1 sowie eine Sitzlängsverstellung mit den Merkmalen des Patentanspruchs 11.

Vorteilhafte Ausgestaltungen und Weiterbildungen der Erfindung sind in den abhängigen Ansprüchen angegeben.

Ein erfindungsgemäßes Zahnradgetriebe weist ein erstes Zahnrad mit ersten Zahnflanken und ein zweites Zahnrad mit zweiten Zahnflanken auf, wobei das zweite Zahnrad mit dem ersten Zahnrad im Eingriff steht. Das erste Zahnrad weist einen Kopfkreis mit einem Kopfkreisradius, einen Fußkreis mit einem Fußkreisradius und einen zwischen dem Kopfkreis und dem Fußkreis angeordneten Modifikationskreis mit einem Modifikationskreisradius auf. Erfindungsgemäß weisen die ersten Zahnflanken zwischen dem Fußkreis und dem Modifikationskreis jeweils eine Aussparung derart auf, dass zwischen dem Fußkreis und dem Modifikationskreis kein Kontakt zwischen den ersten Zahnflanken und den zweiten Zahnflanken stattfindet.

Vorzugsweise ist der Fußkreisradius kleiner als der Modifikationskreisradius und der Modifikationskreisradius kleiner als der Kopfkreisradius ausgebildet. Dadurch kann der vorzugsweise jeweils als Kontaktflanke bezeichnete Bereich der ersten Zahnflanken, der dafür vorgesehen ist, mit den zweiten Zahnflanken in Kontakt zu stehen, im Vergleich zu herkömmlichen Zahnradgetrieben verkürzt werden. Die Kontaktflanke ist vorzugsweise zwischen dem Modifikationskreis und dem Kopfkreis angeordnet. Durch die derartige Modifikation der Kontaktflanke kann eine modifizierte Eingriffslinie des Zahnradgetriebes realisiert werden, die gegenüber der idealen Eingriffslinie sowie der realen Eingriffslinie eines herkömmlichen Zahnradgetriebes im Bereich des Einlaufens deutlich abgeflacht ausgebildet ist. Eine Abflachung der Eingriffslinie in dem Einlaufbereich führt vorzugsweise dazu, dass die Schwankung der Steifigkeit im Verlauf des Zahneingriffs verringert wird. Eine geringere Schwankung der Steifigkeit des Zahneingriffs kann zu einer geringeren Drehungleichförmigkeit des Zahnradgetriebes und zu einer geringeren Schwingungsanregung führen. Mittels der Aussparung kann damit das Geräusch- und Vibrationsverhalten des Zahnradgetriebes verbessert werden, insbesondere ohne dass die Überdeckung des Zahnradgetriebes verändert wird.

Unabhängig von der Verkürzung der Kontaktflanken kann das zweite Zahnrad jedoch in den Bereich zwischen dem Modifikationskreis und dem Fußkreis eintauchen, ohne dass dort ein Kontakt der zweiten Zahnflanken mit den ersten Zahnflanken stattfindet.

Aus der Differenz von Kopfkreisradius und Fußkreisradius kann eine Zahnhöhe gebildet werden und aus der Differenz von Modifikationskreisradius und Fußkreisradius kann eine Modifikationshöhe gebildet werden. Das Verhältnis von Modifikationshöhe zu Zahnhöhe liegt dabei vorzugsweise im Intervall von 0,3 bis 0,8, vorzugsweise im Intervall von 0,6 bis 0,7. Das Verhältnis von Modifikationshöhe zu Zahnhöhe kann von der Übersetzung des Zahnradgetriebes abhängig sein. Die Übersetzung wird vorzugsweise durch das Verhältnis der Drehzahl des zweiten Zahnrads zur Drehzahl des ersten Zahnrads gebildet. Bei einer Übersetzung von 3,25 ist das Verhältnis von Modifikationshöhe zu Zahnhöhe vorzugsweise 0,6. Bei einer Übersetzung von 3,75 ist das Verhältnis von Modifikationshöhe zu Zahnhöhe vorzugsweise 0, 67 .

In einer bevorzugten Ausführungsform der Erfindung weisen die ersten Zahnflanken zwischen dem Modifikationskreis und dem Kopfkreis zumindest abschnittsweise eine erste Evolventengeometrie auf. Dadurch kann ein gleichmäßiger Verlauf des Zahneingriffs erreicht werden. Die erste Evolventengeometrie kann einen sehr großen Krümmungsradius aufweisen. Bevorzugt ist die erste Evolventengeometrie im Bereich der Kontaktflanke angeordnet.

Die zweiten Zahnflanken können zumindest abschnittsweise jeweils eine zweite Evolventengeometrie aufweisen. Insbesondere im Zusammenspiel mit der zumindest abschnittsweise ausgebildeten ersten Evolventengeometrie der ersten Zahnflanken kann damit ein gleichmäßiger Verlauf des Zahneingriffs erreicht werden. Vorzugsweise ist die zweite Evolventengeometrie jeweils in dem Bereich der zweiten Zahnflanken angeordnet, der dazu bestimmt ist, mit den Kontaktflanken des ersten Zahnrads in Kontakt zu stehen.

Die Erfindung kann derart ausgebildet sein, dass das erste Zahnrad und/oder das zweite Zahnrad zumindest teilweise aus Kunststoff gefertigt sind. Durch die guten Dämpfungseigenschaften des Kunststoffs kann die Schwingungsanregung weiter verringert werden. Vorzugsweise sind das erste Zahnrad und/oder das zweite Zahnrad zumindest teilweise aus dem Thermoplast PEEK gefertigt. Dadurch kann das entsprechende Zahnrad einfach herstellbar und darüber hinaus kostengünstig und verschleißarm ausgebildet sein.

Außerdem können das erste Zahnrad und/oder das zweite Zahnrad zumindest teilweise aus Metall gefertigt sein. Dabei können insbesondere nur die jeweiligen Zahnflanken, nur die Zähne des jeweiligen Zahnrads oder das jeweilige Zahnrad vollständig aus Metall oder Kunststoff gefertigt sein. Vorzugsweise ist eines der Zahnräder aus Kunststoff und das andere Zahnrad aus Metall gefertigt. Dadurch können die Eigenschaften von metallenen Zahnrädern mit den guten Dämpfungseigenschaften des Kunststoffs kombiniert werden. Darüber hinaus kann die Werkstoffkombination besonders gute Gleiteigenschaften aufweisen. Dadurch kann der Wälzvorgang in einem derartigen Zahnradgetriebe besonders verschleißarm erfolgen. Besonders bevorzugt ist das erste Zahnrad aus Kunststoff und das zweite Zahnrad aus Metall gefertigt. Das Anbringen der Aussparung kann dabei an dem Kunststoffzahnrad besonders einfach möglich sein. Insbesondere wenn das herkömmliche Zahnradgetriebe derart ausgebildet ist, dass das erste Zahnrad aus Kunststoff und das zweite Zahnrad aus Metall gefertigt ist, kann davon ausgehend das erfindungsgemäße Zahnradgetriebe mit einem geringen technischen und wirtschaftlichen Aufwand bereitgestellt werden.

In einer bevorzugten Ausführungsform der Erfindung sind die ersten Zahnflanken frei von einem Hinterschnitt. Insbesondere wenn das erste Zahnrad aus Kunststoff ausgebildet ist und beispielsweise mittels eines Kunststoffspritzgussverfahrens gefertigt wird, kann dadurch eine einfache Herstellbarkeit erreicht werden.

Besonders bevorzugt weist die Aussparung eine Aussparungskontur auf, die zumindest abschnittsweise parallel zu einer radialen Richtung des ersten Zahnrads ausgebildet ist. Eine derartige Aussparungskontur kann einfach hergestellt werden. Insbesondere kann damit eine möglichst große Aussparung erreicht werden, ohne dass die ersten Zahnflanken einen Hinterschnitt aufweisen. Ein entsprechender paralleler Abschnitt schließt sich vorzugsweise an das dem Fußkreis zugewandte Ende der Kontaktflanke an.

In einer bevorzugten Ausführungsform der Erfindung ist das Zahnradgetriebe als Schraubradgetriebe ausgebildet. Dadurch kann eine kompakte Bauform bei gleichzeitig hoher Übersetzung realisiert werden.

Das erste Zahnrad kann als Schneckenrad und das zweite Zahnrad kann als Schnecke ausgebildet sein. Vorzugsweise ist das erste Zahnrad als Schnecke und das zweite Zahnrad als Schneckenrad ausgebildet. Damit sind die Aussparungen vorzugsweise an den Zahnflanken der Schnecke angeordnet.

Eine erfindungsgemäße Sitzlängsverstellung für ein Kraftfahrzeug umfasst ein Zahnradgetriebe nach einem der vorhergehenden Ansprüche. Die Sitzlängsverstellung kann dadurch hohe Anforderungen an das Geräusch- und Vibrationsverhalten erfüllen.

Ein Ausführungsbeispiel der Erfindung wird anhand der nachfolgenden Figuren erläutert. Es zeigt:
- Figur 1: einen Achsschnitt eines Teil eines ersten Zahnrads eines ersten Ausführungsbeispiels eines Zahnradgetriebes vor einem Achsschnitt eines ersten Zahnrads eines ersten Zahnradgetriebes des Stands der Technik,
- Figur 2: einen Querschnitt des Eingriffs eines Zahnradgetriebes mit verschiedenen Eingriffslinien,
- Figur 3a: einen Querschnitt des Eingriffs eines zweiten Ausführungsbeispiels eines Zahnradgetriebes in einer ersten Position,
- Figur 3b: einen Querschnitt des Eingriffs eines zweiten Zahnradgetriebes des Stands der Technik in der ersten Position,
- Figur 4a: einen Querschnitt des Eingriffs des in Fig. 3a gezeigten Ausführungsbeispiels eines Zahnradgetriebes in einer zweiten Position,
- Figur 4b: einen Querschnitt des Eingriffs des in Fig. 3b gezeigten Zahnradgetriebes des Stands der Technik in der zweiten Position.

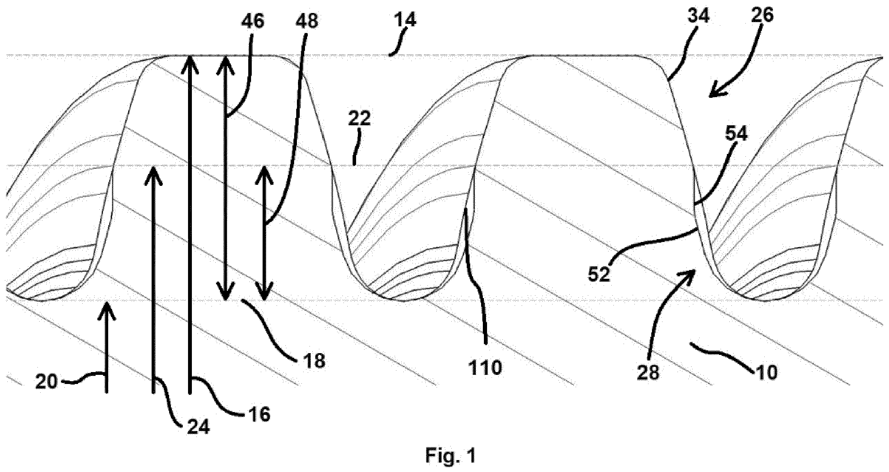

Die Figuren 1 bis 3a und 4a zeigen verschiedene Ansichten verschiedener Ausführungsbeispiele. Der Übersichtlichkeit halber werden nicht alle Bezugszeichen in jeder Figur verwendet. Für gleiche und funktionsgleiche Teile werden die gleichen Bezugszeichen verwendet.

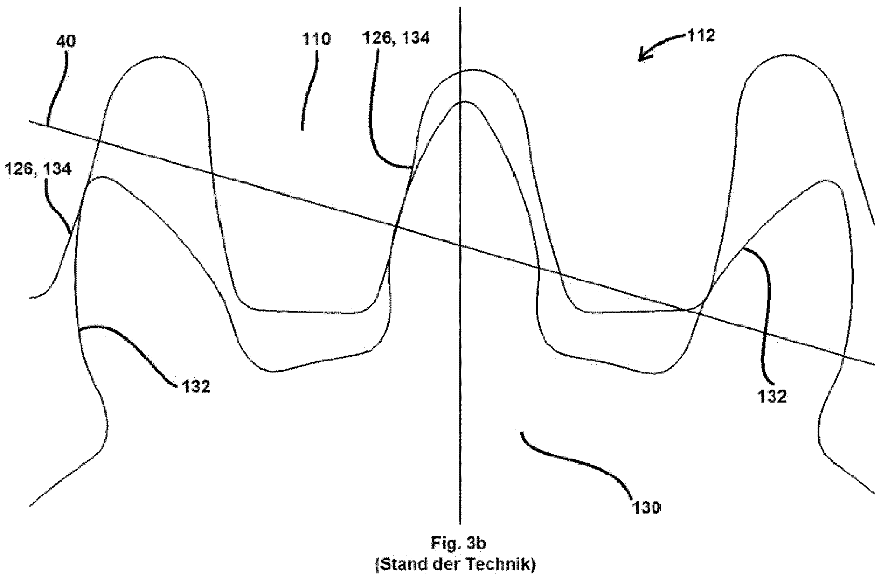

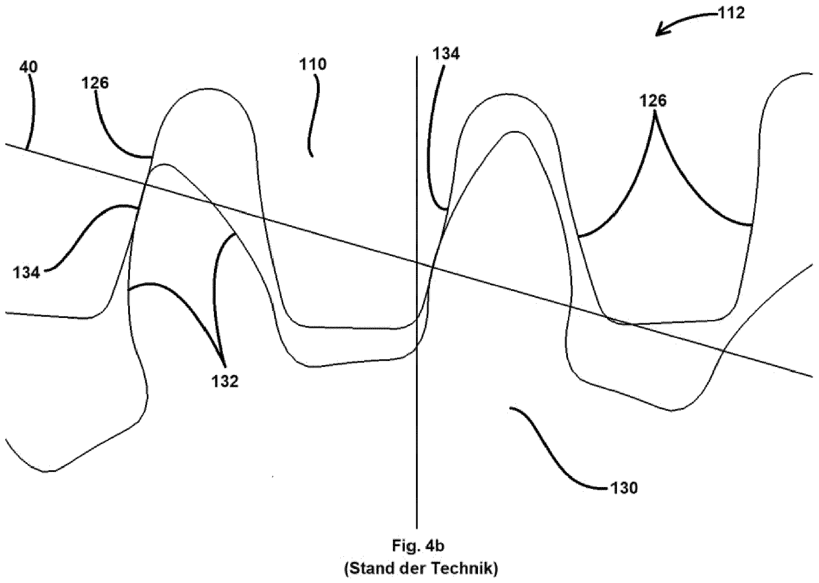

Die Figuren 3b und 4b zeigen verschiedene Ansichten eines Zahnradgetriebes des Stands der Technik. Der Übersichtlichkeit halber werden nicht alle Bezugszeichen in jeder Figur verwendet. Für gleiche und funktionsgleiche Teile werden die gleichen Bezugszeichen verwendet.

Fig. 1 zeigt einen Querschnitt eines Teil eines ersten Zahnrads 10 eines ersten Ausführungsbeispiels eines Zahnradgetriebes 12 vor einem Querschnitt eines ersten Zahnrads 110 eines Zahnradgetriebes 112 des Stands der Technik. Dabei ist das erste Zahnrad 10 schraffiert dargestellt. Das erste Zahnrad 110 des Stands der Technik weist keine Schraffur auf.

Das erste Zahnrad 10 weist einen Kopfkreis 14 mit einem Kopfkreisradius 16, einen Fußkreis 18 mit einem Fußkreisradius 20 und einen zwischen dem Kopfkreis 14 und dem Fußkreis 18 angeordneten Modifikationskreis 22 mit einem Modifikationskreisradius 24 auf. Darüber hinaus weist das erste Zahnrad 10 erste Zahnflanken 26 auf, die zwischen dem Fußkreis 18 und dem Modifikationskreis 22 jeweils eine Aussparung 28 aufweisen. Die Aussparung 28 wird in Fig. 1 insbesondere im Vergleich mit dem ersten Zahnrad 110 des Stands der Technik deutlich.

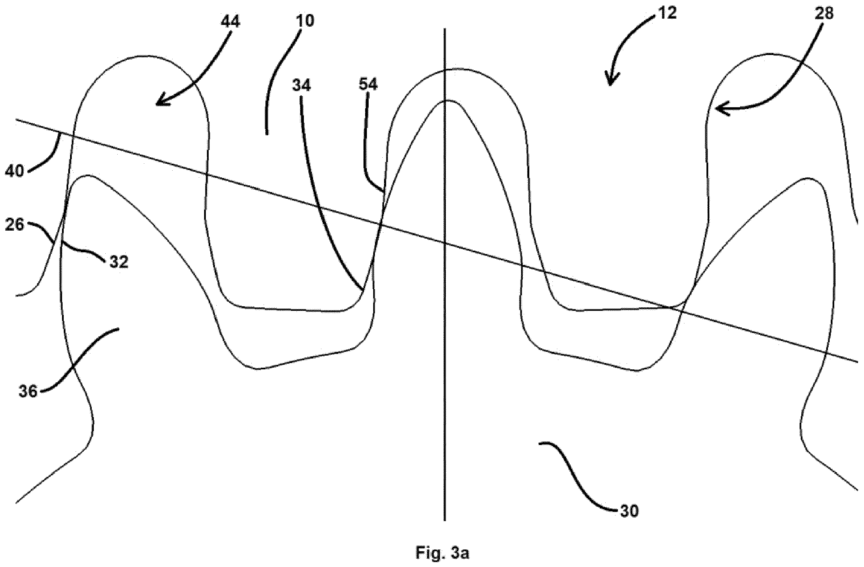

In den Fig. 3a u. 4a ist ein Ausführungsbeispiel eines Zahnradgetriebes 12 dargestellt, das neben dem ersten Zahnrad 10 mit den ersten Zahnflanken 26 ein zweites Zahnrad 30 mit zweiten Zahnflanken 32 aufweist, wobei das zweite Zahnrad 30 mit dem ersten Zahnrad 10 im Eingriff steht. Die an den ersten Zahnflanken 26 angeordneten Aussparungen 28 sind derart ausgebildet, dass zwischen dem Fußkreis 18 und dem Modifikationskreis 22 kein Kontakt zwischen den ersten Zahnflanken 26 und den zweiten Zahnflanken 32 stattfindet.

Bei den in Fig. 1 und Fig. 3a u. 4a gezeigten Ausführungsbeispielen ist der Fußkreisradius 20 kleiner als der Modifikationskreisradius 24 und der Modifikationskreisradius 24 kleiner als der Kopfkreisradius 16 ausgebildet. Dadurch kann der jeweils als Kontaktflanke 34 bezeichnete Bereich der ersten Zahnflanken 26, der dafür vorgesehen ist, mit den zweiten Zahnflanken 32 in Kontakt zu stehen, im Vergleich zu den Kontaktflanken 134 der herkömmlichen Zahnradgetriebe 112 verkürzt werden. Die Kontaktflanke 34 ist vorzugsweise zwischen dem Modifikationskreis 22 und dem Kopfkreis 14 angeordnet.

Unabhängig von der Verkürzung der Kontaktflanken 34 kann das zweite Zahnrad 30 jedoch in den Bereich zwischen dem Modifikationskreis 22 und dem Fußkreis 18 eintauchen, ohne dass dort ein Kontakt der zweiten Zahnflanken 32 mit den ersten Zahnflanken 26 stattfindet.

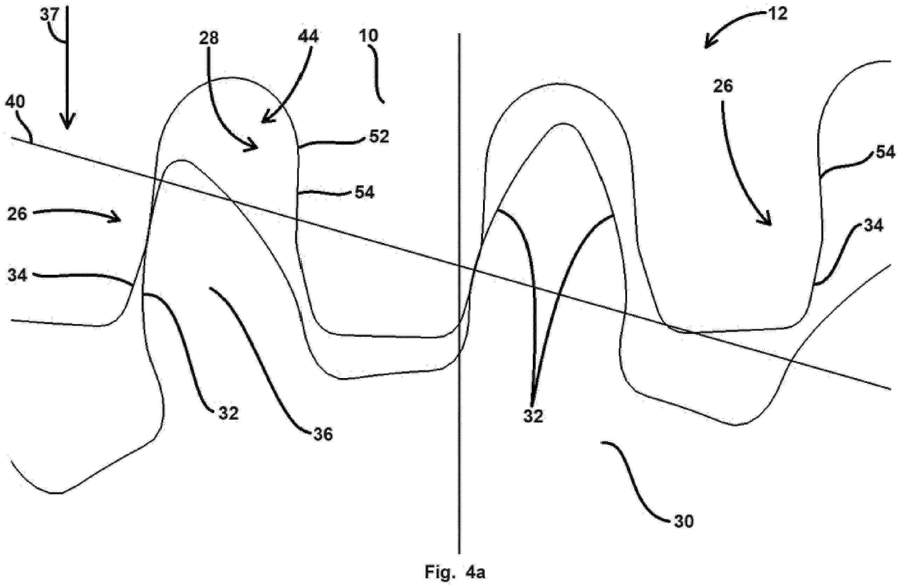

Die Verkürzung der Kontaktflanken 34 ist insbesondere aus den Fig. 4a u. 4b erkennbar. Während Fig. 4a ein erfindungsgemäßes Zahnradgetriebe 12 zeigt, zeigt Fig. 4b ein entsprechendes herkömmliches Zahnradgetriebe 112 ohne Aussparungen 28. In den Fig. 4a u. 4b sind die Zahnradgetriebe 12, 112 an der gleichen Position, also an der gleichen Stelle des Eingriffs dargestellt. Bei der in Fig. 4a u. 4b dargestellten Position handelt es sich dabei um die Position, bei der der Unterschied des Eingriffs zwischen dem erfindungsgemäßen Zahnradgetriebe 12 und dem herkömmlichen Zahnradgetriebe 112 maximal wird. Der Kontakt zwischen der ersten Zahnflanke 26 und der zweiten Zahnflanke 32 eines einlaufenden Zahns 36 des zweiten Zahnrads 30 findet in Bezug auf eine radiale Richtung 37 des ersten Zahnrads 10 deutlich weiter außen statt (Fig. 4a), als das bei dem entsprechenden Zahnradgetriebe 112 des Stands der Technik der Fall ist (Fig. 4b).

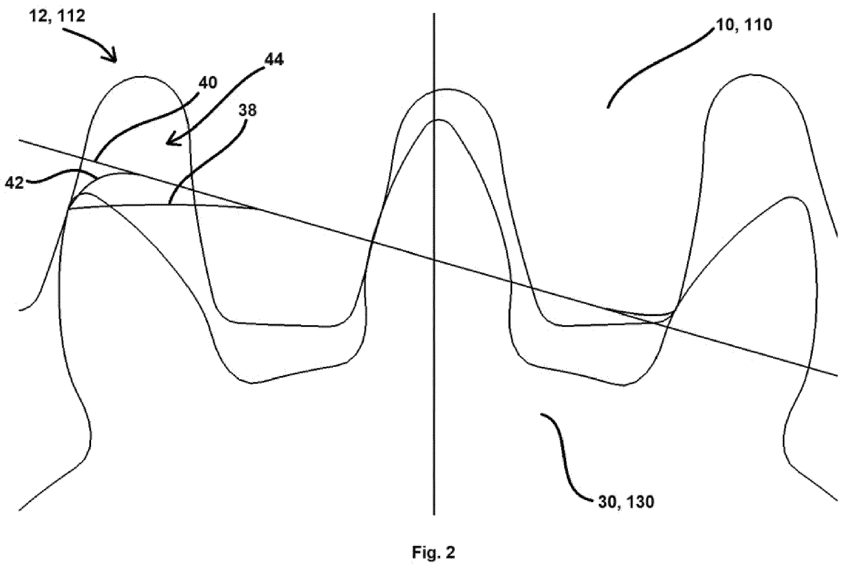

Durch die derartige Modifikation der Kontaktflanke 34 kann eine modifizierte Eingriffslinie 38 des Zahnradgetriebes 12 realisiert werden, die gegenüber der idealen Eingriffslinie 40 sowie der realen Eingriffslinie 42 des herkömmlichen Zahnradgetriebes 112 in einem Einlaufbereich 44 deutlich abgeflacht ausgebildet ist (siehe Fig. 2). Der Einlaufbereich 44 stellt bei Zahnradpaarungen üblicherweise den Bereich dar, in dem der Zahneingriff beginnt. In den Fig. 2 bis 4b ist das erste Zahnrad 10 als antreibendes Zahnrad ausgebildet, sodass der Einlaufbereich 44 in diesen Figuren links angeordnet ist. Die Abflachung der modifizierten Eingriffslinie 38 in dem Einlaufbereich 44 führt vorzugsweise dazu, dass die Steifigkeitsschwankung über den Verlauf des Zahneingriffs reduziert wird. Durch eine so erreichte Reduzierung der Schwankung der Steifigkeit über den Verlauf des Zahneingriffs kann das Geräusch- und Vibrationsverhalten des Zahnradgetriebes 12 verbessert werden.

Wie in Fig. 2 dargestellt ist, nähern sich die reale Eingriffslinie 42 des herkömmlichen Zahnradgetriebes 112 und die modifizierte Eingriffslinie 38 des Zahnradgetriebes 12 im Verlauf des Zahneingriffs an die ideale Eingriffslinie 40 an. Der Kontakt zwischen den ersten Zahnflanken 26 und den zweiten Zahnflanken 32 unterscheidet sich demnach insbesondere im Einlaufbereich von dem Kontakt von ersten Zahnflanken 126 des ersten Zahnrads 110 mit zweiten Zahnflanken 132 eines zweiten Zahnrads 130 des herkömmlichen Zahnradgetriebes 112. Veranschaulicht wird der in Fig. 2 zusammengefasste Unterschied anhand der Fig. 3a bis 4b, wobei den in Fig. 3a u. 4a dargestellten Positionen des Zahneingriffs des Zahnradgetriebes 12 die jeweils entsprechende Position des Zahneingriffs des herkömmlichen Zahnradgetriebes 112 in Fig. 3b u. 4b gegenübergestellt wird. Zur Veranschaulichung ist in die Fig. 3a bis 4b jeweils die ideale Eingriffslinie 40 als Referenz eingezeichnet.

Wie in Fig. 1 gezeigt, kann aus der Differenz von Kopfkreisradius 16 und Fußkreisradius 20 kann eine Zahnhöhe 46 gebildet werden. Aus der Differenz von Modifikationskreisradius 24 und Fußkreisradius 20 kann eine Modifikationshöhe 48 gebildet werden. Das Verhältnis der Modifikationshöhe 48 zur Zahnhöhe 46 kann von der Übersetzung des Zahnradgetriebes 12 abhängig sein. Bei einer Übersetzung von 3,25 ist das Verhältnis der Modifikationshöhe 48 zur Zahnhöhe 46 vorzugsweise 0,6. Bei einer Übersetzung von 3,75 ist das Verhältnis der Modifikationshöhe 48 zur Zahnhöhe 46 vorzugsweise 0,67.

Bei den in Fig. 1 u. Fig. 3a u. 4a gezeigten Ausführungsbeispielen weisen die ersten Zahnflanken 26 zwischen dem Modifikationskreis 22 und dem Kopfkreis 14 abschnittsweise eine erste Evolventengeometrie auf. Die erste Evolventengeometrie kann einen sehr großen Krümmungsradius aufweisen und ist im Bereich der Kontaktflanke 34 angeordnet. Bei dem in Fig. 3a und Fig. 4a gezeigten Ausführungsbeispiel des Zahnradgetriebes 12 weisen die zweiten Zahnflanken 32 zumindest abschnittsweise jeweils eine zweite Evolventengeometrie auf. Vorzugsweise ist die zweite Evolventengeometrie jeweils in dem Bereich der zweiten Zahnflanken 32 angeordnet, der dazu bestimmt ist, mit den Kontaktflanken 34 des ersten Zahnrads 10 in Kontakt zu stehen.

Die in Fig. 2 bis 4b gezeigten Zahnradgetriebe 12, 112 sind als Schraubradgetriebe ausgebildet. Dabei ist jeweils das erste Zahnrad 10, 110 als Schnecke und das zweite Zahnrad 30, 130 als Schneckenrad ausgebildet. Damit sind die Aussparungen 28 der ersten Zahnflanken 26 an den Zahnflanken der Schnecke angeordnet. Auch das in Fig. 1 dargestellte erste Zahnrad 10 ist für ein Schraubradgetriebe vorgesehen und als Schnecke ausgebildet.

Bei den in Fig. 2 bis 4b gezeigten Zahnradgetrieben 12, 112 ist jeweils das erste Zahnrad 10, 110, also die Schnecke, aus dem Kunststoff PEEK gefertigt. Jeweils das zweite Zahnrad 30, 130, also das Schneckenrad, ist aus Metall gefertigt.

In den in Fig. 1 und in Fig. 3a u. 4a gezeigten Ausführungsbeispielen sind die ersten Zahnflanken 26 frei von einem Hinterschnitt. Dabei weist jede der Aussparungen 28 eine Aussparungskontur 52 auf, die zumindest abschnittsweise parallel zu einer radialen Richtung 54 des ersten Zahnrads 10 ausgebildet ist. Ein entsprechender paralleler Abschnitt 54 schließt sich an das dem Fußkreis 18 zugewandte Ende der Kontaktflanke 34 an.

### Bezugszeichenliste

- 10: erstes Zahnrad
- 12: Zahnradgetriebe
- 14: Kopfkreis
- 16: Kopfkreisradius
- 18: Fußkreis
- 20: Fußkreisradius
- 22: Modifikationskreis
- 24: Modifikationskreisradius
- 26: erste Zahnflanke
- 28: Aussparung
- 30: zweites Zahnrad
- 32: zweite Zahnflanke
- 34: Kontaktflanke
- 36: einlaufender Zahn
- 37: radiale Richtung
- 38: modifizierte Eingriffslinie
- 40: ideale Eingriffslinie
- 42: reale Eingriffslinie des herkömmlichen Zahnradgetriebes
- 44: Einlaufbereich
- 46: Zahnhöhe
- 48: Modifikationshöhe
- 52: Aussparungskontur
- 54: paralleler Abschnitt
- 110: erstes Zahnrad (Stand der Technik)
- 112: Zahnradgetriebe (Stand der Technik)
- 126: erste Zahnflanken (Stand der Technik)
- 130: zweites Zahnrad (Stand der Technik)
- 132: zweite Zahnflanken (Stand der Technik)
- 134: Kontaktflanke (Stand der Technik)

## Patentansprüche

1. Zahnradgetriebe (12) mit einem ersten Zahnrad (10), das erste Zahnflanken (26) aufweist, und einem zweiten Zahnrad (30), das zweite Zahnflanken (32) aufweist und das mit dem ersten Zahnrad (10) im Eingriff steht, wobei das erste Zahnrad (10) einen Kopfkreis (14) mit einem Kopfkreisradius (16), einen Fußkreis (18) mit einem Fußkreisradius (20) und einen zwischen dem Kopfkreis (14) und dem Fußkreis (18) angeordneten Modifikationskreis (22) mit einem Modifikationskreisradius (24) aufweist,
**dadurch gekennzeichnet, dass** die ersten Zahnflanken (26) zwischen dem Fußkreis (18) und dem Modifikationskreis (22) jeweils eine Aussparung (28) derart aufweisen, dass beim Kämmen der Zahnräder (10, 30) zwischen dem Fußkreis (18) und dem Modifikationskreis (22) kein Kontakt zwischen den ersten Zahnflanken (26) und den zweiten Zahnflanken (32) stattfindet.

2. Zahnradgetriebe nach Anspruch 1,
**dadurch gekennzeichnet, dass** aus der Differenz von Kopfkreisradius (16) und Fußkreisradius (20) eine Zahnhöhe (46) gebildet wird und aus der Differenz von Modifikationskreisradius (24) und Fußkreisradius (20) eine Modifikationshöhe (48) gebildet wird, wobei das Verhältnis von Modifikationshöhe (48) zu Zahnhöhe (46) im Intervall von 0,3 bis 0,8, vorzugsweise im Intervall von 0,6 bis 0,7 liegt.

3. Zahnradgetriebe nach einem der vorhergehenden Ansprüche,
**dadurch gekennzeichnet, dass** die ersten Zahnflanken (26) zwischen dem Modifikationskreis (22) und dem Kopfkreis (14) zumindest abschnittsweise eine erste Evolventengeometrie aufweisen.

4. Zahnradgetriebe nach einem der vorhergehenden Ansprüche, **dadurch gekennzeichnet, dass** die zweiten Zahnflanken (32) zumindest abschnittsweise jeweils eine zweite Evolventengeometrie aufweisen.

5. Zahnradgetriebe nach einem der vorhergehenden Ansprüche, **dadurch gekennzeichnet, dass** das erste Zahnrad (10) und/oder das zweite Zahnrad (30) zumindest teilweise aus Kunststoff gefertigt sind.

6. Zahnradgetriebe nach einem der vorhergehenden Ansprüche, **dadurch gekennzeichnet, dass** das erste Zahnrad (10) und/oder das zweite Zahnrad (30) zumindest teilweise aus Metall gefertigt sind.

7. Zahnradgetriebe nach einem der vorhergehenden Ansprüche, **dadurch gekennzeichnet, dass** die ersten Zahnflanken (26) frei von einem Hinterschnitt sind.

8. Zahnradgetriebe nach einem der vorhergehenden Ansprüche, **dadurch gekennzeichnet, dass** die Aussparung (28) eine Aussparungskontur (52) aufweist, die zumindest abschnittsweise parallel zu einer radialen Richtung (37) des ersten Zahnrads (10) ausgebildet ist.

9. Zahnradgetriebe nach einem der vorhergehenden Ansprüche, **dadurch gekennzeichnet, dass** das Zahnradgetriebe (12) als Schraubradgetriebe ausgebildet ist.

10. Zahnradgetriebe nach Anspruch 9,
**dadurch gekennzeichnet, dass** das erste Zahnrad (10) als Schnecke und das zweite Zahnrad (30) als Schneckenrad oder das erste Zahnrad (10) als Schneckenrad und das zweite Zahnrad (30) als Schnecke ausgebildet ist.

11. Sitzlängsverstellung für ein Kraftfahrzeug mit einem Zahnradgetriebe (12) nach einem der vorhergehenden Ansprüche.
